# EUROPEAN PATENT APPLICATION

(11) **EP 4 599 940 A1**
(43) Date of publication of application: **13.08.2025**
(21) Application number: 23875172.1
(22) Date of filing: 27.09.2023
(51) Int. Cl.: B05B 7/04, A45D 34/04, A45D 34/06, A45D 33/28, A45D 33/02, B05B 12/14, B05B 12/00, B05B 12/02, B05B 15/20

(54) **MIXING SPRAY APPARATUS AND METHOD**

(30) Priority: 04.10.2022 KR 20220125995
(71) Applicant: EnterTake Co., Ltd., Seoul 04626 (KR)
(72) Inventor: OH, Seong Min, Yongin-si, Gyeonggi-do 16803 (KR); YANG, Kwang Hee, Seoul 08051 (KR); AN, Jong Tae, Seoul 08259 (KR)
(74) Representative: Sander, Rolf
(86) International application number: PCT/KR2023/015086
(87) International publication number: WO 2024/076108

(57) **Abstract**

Disclosed is a mixing spray device including a housing, a container portion installed in the housing and configured to store heterogeneous contents separately, an internal discharge unit configured to pressurize the container portion and discharge the heterogeneous contents into a mixing chamber within the housing, a mixing unit configured to mix the heterogeneous contents discharged by the internal discharge unit, an external discharge unit configured to discharge the mixed contents, mixed by the mixing unit, to an outside of the housing; and a user interface installed on an outer surface of the housing and configured to control the external discharge unit, and the user interface is configured to allow the external discharge unit to discharge the mixed contents without power supply. According to the present disclosure, the heterogeneous materials may be mixed and discharged without altering each component.

## Description

### [TECHNICAL FIELD]

The present disclosure relates to a mixing spray device and method, and more specifically, to a device and method capable of mixing and spraying a solid-type content and a liquid-type content.

### [BACKGROUND ART]

Cosmetic containers vary in shape and material depending on the diversification of consumer preferences, individualization, and technological advancement. Cosmetics are packaged in various types, shapes, and forms of containers depending on the intended use and formulation.

The cosmetics contained in cosmetic containers, i.e., the contents, are classified into five categories: perfume, cologne, hair cosmetics, skin cosmetics, makeup cosmetics, and special-purpose cosmetics. The purpose of these cosmetic containers is to protect the contents, and to ensure the quality of the contents from the manufacturing of the contents through packaging, distribution, storage, and sales until the consumers purchase and use the contents.

With changes in the times, cosmetic containers have evolved through a period of individualization and diversification in terms of design and fashion, leading to the development of new containers with high functionality and high added value. Accordingly, in cosmetic containers, environmental considerations and functional aspects for ensuring the quality of the contents are increasingly emphasized.

The design of cosmetic containers needs to consider both social compatibility and economic feasibility, in line with developments in new materials and processing technologies, while maintaining basic functions such as protection, stability, convenience, and information delivery.

Pumps, a type of cosmetic container, are divided into airless pumps, dispenser pumps, dropper pumps, mist pumps, and well pumps. Meanwhile, another type of container, which is distinct from pumps, is the aerosol container, which uses a method of putting contents and liquefied or pressurized gas into the container and sealing the contents with a valve button. Aerosol containers discharge the contents by pressing a button, and are used for foam hair products, hair sprays, etc. that are discharged in spray or bubble form.

Cosmetics produced through the process of mixing various types of ingredients often experience deterioration of the original properties due to chemical reactions among the ingredients, resulting in reduced functional effectiveness. For example, cosmetics or hair dyes containing vitamin components are typical cases. To address these issues, active research is underway on cosmetic containers designed to hold heterogeneous materials.

As a technology related to the present disclosure, a technology concerning a heterogeneous material mixing container disclosed in the Korean Patent Registration Gazette proposes a device and method for discharging separated contents of a container using a first pump set and a second pump set. This related technology is distinguished from the present disclosure in terms of structure and effect, in that two pumps are used for two target liquid-type contents, whereas one pump is used for a solid-type content in the present disclosure.

### [DETAILED DESCRIPTION OF INVENTION]

### [TECHNICAL PROBLEMS]

One problem to be solved by the present disclosure is to provide a device for mixing and discharging heterogeneous materials.

One problem to be solved by the present disclosure is to provide a device capable of individually discharging a solid-type content and a liquid-type content in accordance with a single-use amount.

One problem to be solved by the present disclosure is to provide a device capable of uniformly mixing a solid-type content and a liquid-type content and discharging a mixture thereof.

One problem to be solved by the present disclosure is to provide a device capable of mixing heterogeneous materials in a single-use amount and entirely discharging a mixed mixture during a single use.

One problem to be solved by the present disclosure is to provide a device having a function of notifying non-discharge of a mixture generated during a mixing process.

### [TECHNICAL SOLUTION]

According to one embodiment of the present disclosure, a mixing spray device includes a housing and a main body installed within the housing, wherein the main body comprises: a container portion for storing heterogeneous contents separately; an internal discharge unit configured to pressurize the container portion and discharge the contents into a mixing chamber installed below the container portion; mixing unit configured to mix the contents within the mixing chamber to produce a mixture; an external discharge unit configured to discharge the mixture from the mixing chamber; a power supply unit configured to supply power to the internal discharge unit and the mixing unit; and a user interface installed on a surface of the housing, wherein the user interface is configured to discharge a predetermined amount of the contents and control discharge of all the mixture within a predetermined time after mixing.

Additionally, the mixing spray device may be configured to include: a head cover on which the user interface is installed; a middle cover coupled to the head cover; and a bottom cover configured to be coupled to the middle cover.

In addition, the mixing spray device may configured such that the head cover includes a hinge connected to the middle cover on one side, and a coupling part coupled to the middle cover on the other side according to an action of the hinge and the head cover rotates to be opened and closed with respect to the middle cover according to separation and coupling of the coupling part and the middle cover.

Additionally, the mixing spray device may be configured such that the middle cover and the coupling part include a magnetic material that induces the coupling.

Additionally, the mixing spray device may be configured such that the container portion includes a cartridge storing the contents and being replaceable, and a cartridge housing in which the cartridge is mounted.

Additionally, the mixing spray device may be configured such that the cartridge includes a first cartridge in which a first content is stored, and a second cartridge in which a second content is stored.

In addition, the mixing spray device may be configured such that the first cartridge includes a first container storing the first content and moving downward in response to pressure received from the internal discharge unit, and a first discharge unit coupled to the first container and discharging the first content from the first container in response to the pressure received.

In addition, the mixing spray device may be configured such that the first discharge unit includes a first upper module for controlling opening and closing of the first container, a first middle module coupled to the first upper module, a first lower module slidably coupled to the first middle module according to a downward movement of the first container and pressurizing the first upper module to allow the first content to be discharged from the first container, and a first elastic body restoring a position of the first container.

In addition, the mixing spray device may be configured such that the second cartridge includes a second container storing the second content and moving downward in response to pressure received from the internal discharge unit, a screw feeder installed in the second container, and a second discharge unit coupled to the screw feeder and configured to interrupt discharge of the second contents from the second container by rotating the screw feeder in response to the pressure.

In addition, the mixing spray device may be configured such that the second discharge unit includes a second upper module for discharging the second content in response to rotation of the screw feeder, a second middle module coupled to the second upper module and rotating the screw feeder by moving downward under the pressure, a second lower module slidingly coupled to the second middle module and interrupting discharge of the second content in response to rotation of the screw feeder, and a second elastic body restoring a position of the second container.

In addition, the mixing spray device may be configured such that the internal discharge unit includes a pressurizing unit applying pressure to the container using the power, and a pressure transmission unit transmitting the pressure of the pressurizing unit to the container portion, and that the user interface includes a power button for controlling the power supply to drive the pressurizing unit.

In addition, the mixing spray device may be configured such that the pressurizing unit includes a motor assembly driven by the power button and a cam coupled to a shaft of the motor assembly and that the pressure transmitting unit moves by the cam to transmit pressure to the container and to be restored to an original position thereof by a restorative elastic body.

In addition, the mixing spray device may be configured such that the mixing unit includes a mixing motor driven by the power, and a screw coupled to the mixing motor to mix the contents in conjunction with the mixing motor.

Additionally, the mixing spray device may be configured such that the external discharge unit includes a discharge pump for applying discharge pressure to the mixture, a discharge hose connecting an input side of the discharge pump and the mixing chamber, and a nozzle connected to an output side of the discharge pump.

Additionally, the mixing spray device may be configured such that the user interface includes a discharge button for driving the discharge pump.

Additionally, the mixing spray device may be configured such that the user interface includes an LED indicator indicating a status of the mixing spray device.

Additionally, the mixing spray device may be configured such that the user interface further comprises a speaker and notifies a discharge standby state to a user through at least one of light and sound when the mixture is not discharged within a predetermined time.

In addition, the mixing spray device may be configured such that the container portion incudes a first container for storing a liquid-type content among the contents, and a second container for storing a solid-type content, and the second container includes a screw feeder that is rotated by pressure from the internal discharge unit to discharge the solid-type content from the second container to the mixing chamber.

A mixing spray method according to one embodiment of the present disclosure is a method performed by a mixing spray device, including: storing heterogeneous contents in a container portion separately; pressurizing the container portion to discharge the contents into a mixing chamber; mixing the contents in the mixing chamber to produce a mixture; and discharging the mixture from the mixing chamber, and the mixing spray method further comprises notifying a discharge standby state to a user through a user interface when the mixture is not discharged within a predetermined time.

Specific details of other embodiments are included in the "Specific Description for Carrying Out the Invention" and the attached drawings.

The advantages and/or features of the present disclosure and the methods for achieving the same should be apparent with reference to the various embodiments described in detail below together with the accompanying drawings.

However, the present disclosure is not limited to the configuration of each embodiment disclosed below, but may be implemented in various different forms, and each embodiment disclosed in this specification is provided only to make the present disclosure complete and is provided to fully inform a person having ordinary skill in the art to which the present disclosure pertains of the scope of the present disclosure, and it should be understood that the present disclosure is defined only by the scope of each of the claims.

### [EFFECT OF INVENTION]

According to the present disclosure, heterogeneous materials may be mixed and discharged without altering each component. Additionally, the solid-type and liquid-type contents that constitute the contents may be individually discharged in accordance with a single-use amount. Additionally, the solid-type and liquid-type contents that constitute the contents may be uniformly mixed and discharged.

Additionally, heterogeneous materials in a single-use amount may be mixed together may be mixed together, and a mixed mixture may be completely discharged during a single use. Additionally, non-discharge of the mixture produced during the mixing process may be informed to a user.

### [BRIEF DESCRIPTION OF THE DRAWING]

FIG. 1 is an exemplary diagram of a mixing spray device according to one embodiment of the present disclosure.
FIG. 2 is an exploded view of a main body and a housing of a mixing spray device according to one embodiment of the present disclosure.
FIG. 3 is an exploded view of a right side of a main body of a mixing spray device according to one embodiment of the present disclosure.
FIG. 4 is an exemplary diagram of an internal discharge unit of a mixing spray device according to one embodiment of the present disclosure.
FIG. 5 is an exemplary diagram of a container portion, a mixing unit, and an external discharge unit of a mixing spray device according to one embodiment of the present disclosure.
FIG. 6 is a cross-sectional view of a mixing spray device according to one embodiment of the present disclosure.
FIG. 7 is an exemplary diagram of a cartridge replacement structure of a mixing spray device according to one embodiment of the present disclosure.
FIG. 8 is an exploded view of a container portion of a mixing spray device according to one embodiment of the present disclosure.
FIG. 9 is an exemplary diagram of a cartridge of a mixing spray device according to one embodiment of the present disclosure.
FIG. 10 is an exploded view of a main body of a mixing spray device according to one embodiment of the present disclosure.
FIG. 11 is a cross-sectional view of FIG. 9.
FIG. 12 is a partial perspective view depicting a bottom surface of a container portion.
FIG. 13 is a circuit diagram of a mixing spray device according to one embodiment of the present disclosure.

### [BEST MODE FOR CARRYING OUT THE INVENTION]

Before describing the present disclosure specifically, the following should be understood. The terms or words used in this specification should not be construed as being unconditionally limited to conventional or dictionary meanings, and the inventor of the present disclosure may properly define and use the concepts of various terms in order to describe the invention in the best possible manner. Furthermore, these terms or words should be construed as meanings and concepts corresponding to the technical spirit of the present disclosure.

In other words, the terms used in this specification are merely used to describe preferable embodiments of the present disclosure and are not intended to specifically limit the content of the present disclosure, and these terms are defined in consideration of various possibilities of the present disclosure.

In addition, it should be noted that, in this specification, singular expressions may include plural expressions unless clearly indicated otherwise in the context, and similarly, plural expressions may include singular expressions.

Throughout this specification, when a certain component is described as "including" another component, it is to be understood that the component does not exclude the presence of other components, and that additional components may be included, unless expressly stated otherwise.

Furthermore, when it is described that a certain component "exists in the inside of" or "is connected to and installed in" another component, the component may be directly connected to or installed in contact with the other component, or may be installed at a certain distance apart from the other component. In the case where the component is installed with a certain spacing, a third component or means for fixing or connecting the relevant component to the other component may be present, and the description of such third component or means may be omitted.

On the contrary, when it is described that a certain component is "directly connected" or "directly coupled" to another component, it should be understood that no third component or means is present.

Also, in this specification, terms such as "one surface," "another surface," "one side," "another side," "first," and "second" are used, if at all, merely to clearly distinguish one component from another, and should not be construed as limiting the meaning of the relevant components.

Also, terms such as "one surface," "another surface," "one side," "another side," "first," and "second" in this specification are used, if at all, merely to clearly distinguish one component from another, and should not be construed as limiting the meaning of the relevant components.

In addition, if terms such as "upper," "lower," "left," and "right" are used in this specification, the terms should be understood as indicating relative positions in the drawings with respect to the relevant components. Unless absolute positions are specifically defined, such position-related terms should not be understood as indicating absolute positions.

Also, in this specification, with respect to the reference numerals given to components in each drawing, the same reference numerals are used for the same components even if the components appear in different drawings. That is, the same reference numerals throughout this specification indicate the same components.

In the drawings attached to this specification, the sizes, positions, and coupling relationships of the respective components constituting the present disclosure may be partially exaggerated, reduced, or omitted to sufficiently and clearly convey the technical spirit of the present disclosure or for convenience of explanation. Accordingly, their proportions or scales may not be exact.

In addition, in describing the present disclosure, configurations such as known technologies including prior art may be omitted if they are deemed to unnecessarily obscure the essence of the present disclosure.

Hereinafter, embodiments of the present disclosure will be described in detail with reference to the relevant drawings.

In the X, Y, and Z coordinate axes indicated in each drawing, the X-axis direction is defined as a width direction of a mixing spray device 100, the Y-axis direction is defined as a thickness direction, and the Z-axis direction is defined as a height direction.

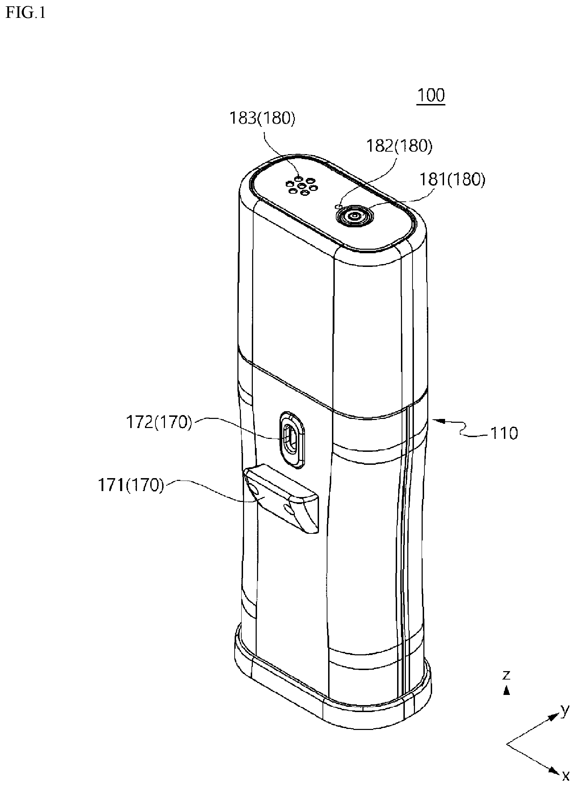

FIG. 1 is an exemplary diagram of a mixing spray according to one embodiment of the present disclosure.

Referring to FIG. 1, a mixing spray device 100 according to one embodiment of the present disclosure may be configured to include a housing 110 and a body 101 (not shown) installed within the housing 110. A power switch 181, an LED indicator 182, and a speaker 183 included in a user interface 180, and a discharge button 171 and a nozzle 172 included in an external discharge unit 170 may be installed on an outer surface of the housing 110.

Hereinafter, the housing 110 and main body 101 of the mixing spray device 100 will be described.

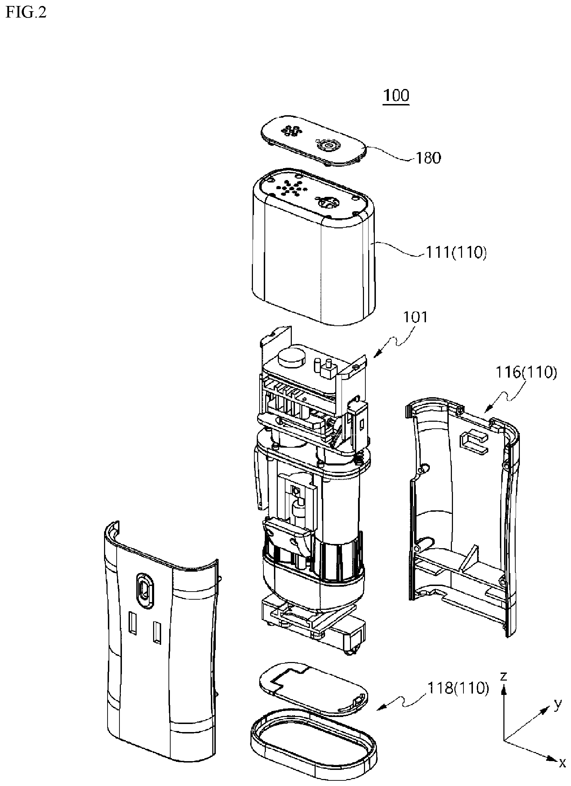

FIG. 2 is an exploded view of a main body and a housing of a mixing spray device according to one embodiment of the present disclosure.

Referring to FIG. 2, a mixing spray device 100 may be disassembled into a housing 110 and a main body 101. A plurality of covers may be assembled to form the complete housing 110. The housing 110 may be configured to include a head cover 111, a middle cover 116, and a bottom cover 118. The middle cover 116 may be separated into a front cover and a rear cover. The bottom cover 118 may be composed of multiple parts to allow opening and closing depending on the type of battery.

A user interface 180 may be disposed on the head cover 111. In addition, the head cover 111 may be coupled to the middle cover 116 to allow opening and closing. The coupling between the head cover 111 and the middle cover 116 will be described later.

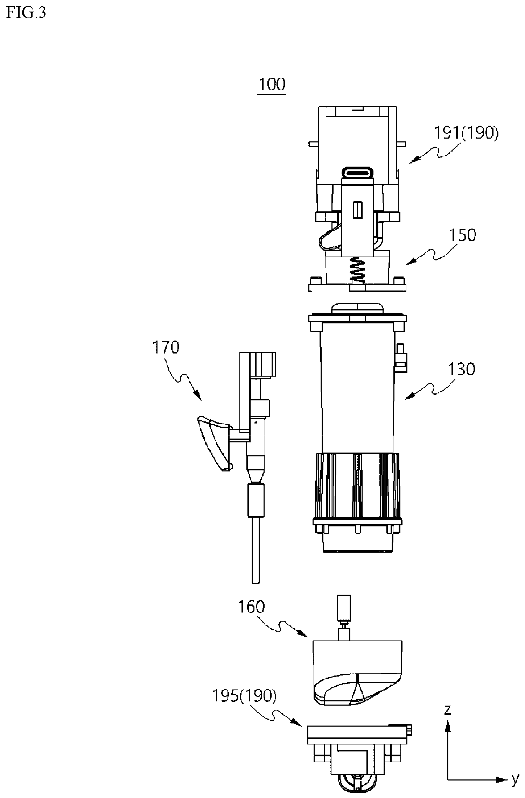

FIG. 3 is an exploded view of a right side of a main body of a mixing spray device according to one embodiment of the present disclosure.

Referring to FIG. 3, a main body 101 of a mixing spray device 100 may be configured to include a container portion 130, an internal discharge unit 150, a mixing unit 160, an external discharge unit 170, and a power supply unit 190. In addition, the power supply unit 190 may be configured to include a PCB assembly 191 and a battery assembly 195. The PCB assembly 191 and the battery assembly 195 may be electrically connected to each other. The PCB assembly 191 may be electrically connected to the internal discharge unit 150 and the mixing unit 160.

The container portion 130, the internal discharge unit 150, the mixing unit 160, and the external discharge unit 170 may be coupled to each other at efficient locations within the housing 110 or coupled to the housing 110 to perform a series of interconnected processes, such as storing contents, internal discharge of the contents, mixing of the contents, and external discharge of a mixture.

For example, the internal discharge unit 150 may be disposed to be in contact with an upper portion of the container portion 130 to pressurize the container portion 130 to discharge the contents. The container portion 130 may be interposed between the internal discharge unit 150 and the mixing unit 160 to discharge the contents downward in response to pressure received from the internal discharge unit 150. In addition, the mixing unit 160 may be disposed below the container portion 130 so as to receive the contents discharged from the container portion 130.

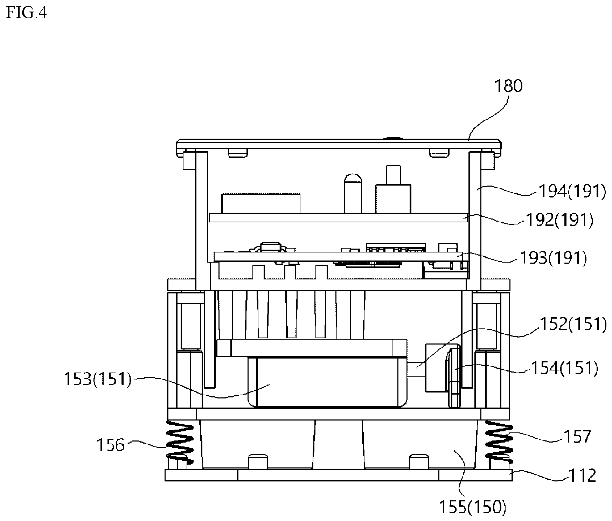

FIG. 4 is an exemplary diagram of an internal discharge unit of a mixing spray device according to one embodiment of the present disclosure.

Referring to FIGS. 3 and 4, the internal discharge unit 150 is located above the container portion 130 and is in contact with a first cartridge 132 and a second cartridge 140 of the container portion 130, and has a function of pressing the cartridges 132 and 140 to discharge the contents stored in a first container 133 and a second container 141 of the container portion 130 into the housing 110, namely, into a mixing chamber 161. The internal discharge unit 150 may include a pressurizing unit 151, a pressure transmitting unit 155, and restoring springs 156 and 157.

The pressurizing unit 151 is fixed within the housing 110, for example, to a PCB bracket 194within the housing 110. The pressure transmitting unit 155 is in contact with the pressurizing unit 151 on one side and the container portion 130 on the other side. The pressure transmitting unit 155 moves forward while pressurizing the container portion 130 in response to pressure being received from the pressurizing unit 151, and moves backward to be restored by the restoring springs 156 and 157 when the pressure is released from the pressurizing unit 151.

The pressurizing unit 151 has a function of generating pressure through a cam 154 coupled to a motor assembly 152 by rotating a motor of the motor assembly 152 in response to the operation of the power switch 181.

The pressure transmitting unit 155 has a function of transmitting the pressure generated by the cam 154 included in the pressurizing unit 151 to the container portion 130. The pressure transmitting unit 155 may be configured to move forward and backward within the housing 110. When the pressure of the pressure transmitting unit 155 is transmitted to the container portion 130, a predetermined amount of the contents stored in a cartridge 131 is discharged into the mixing chamber 161.

The restoring springs 156 and 157 have a function of restoring the cartridge 131 pressed by the pressure transmitting unit 155 to an original position thereof.

The PCB assembly 191 included in the power supply unit 190 may be configured to be coupled to the housing 110. In particular, the pressure transmitting unit 155 included in the internal discharge unit 150 is configured to be movable up and down by means of the restoring springs 156 and 157, and therefore, a lower portion of the pressure transmitting unit 155 may be coupled to the restoring springs 156 and 157 between a head cover bottom surface 112, while an upper portion of the pressure transmitting unit 155 may be slidably coupled to a fixed shaft, for example, the PCB bracket 194 of the PCB assembly 191.

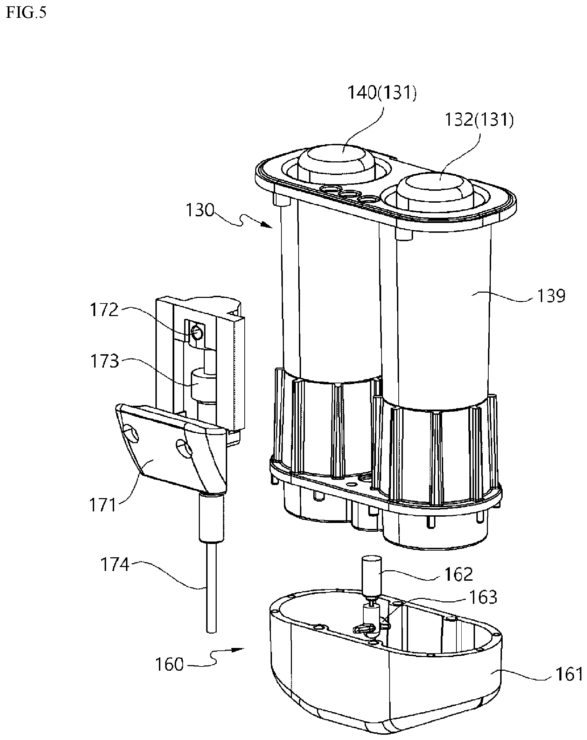

FIG. 5 is an exemplary diagram of a container portion, a mixing unit, and an external discharge unit of a mixing spray device according to one embodiment of the present disclosure.

Referring to FIG. 5, a container portion 130 may be configured to include a cartridge 131 and a cartridge cover 139. The cartridge 131 may include a first cartridge 132 and a second cartridge 140. The first cartridge 132 and the second cartridge 140 may store heterogeneous contents 10 separately. For example, the first cartridge 132 may store a liquid-type content, and the second cartridge 140 may store a solid-type content.

The cartridge 131 may be configured to be separated from and coupled to the cartridge cover 139. Therefore, the cartridge 131 is a consumable and may be replaced.

A mixing unit 160 may be configured to be coupled to a housing 110 and disposed below the container portion 130. Accordingly, the contents discharged (internally discharged) from the container portion 130 may fall into the mixing unit 160 and be temporarily stored. The mixing unit 160 may be configured to include a mixing chamber 161, a mixing motor 162 disposed above the mixing chamber 161 and electrically connected to the PCB assembly 191, and a screw 163 coupled to the mixing motor 162 and disposed within the mixing chamber 161.

The mixing unit 160 may be configured such that the mixing motor 162 is driven by the PCB assembly 191 and the screw 163 coupled to the mixing motor 162 is rotated, thereby mixing contents 11 and 12 stored in the mixing chamber 161 to form a mixture 20.

The external discharge unit 170 may be configured to include a discharge button 171 for transmitting a user's grip pressure, a nozzle 172 through which a mixture is sprayed, a pump 173 configured to provide air pressure for suctioning the mixture, and a hose 174 configured to suction the mixture stored in the mixing chamber 161.

The discharge button 171 may be installed to be exposed on an outside of the housing 110 so as to pressurize the pump 173. The nozzle 172 may be installed at one end of the pump 173 so as to be exposed on the outside through a hole provided in the housing 110. The pump 173 may be configured to be coupled to the nozzle 172 on an output side and the hose 174 on an input side. The hose 174 may be coupled to the other end of the pump 173 and disposed above the mixing chamber 161.

The pump 173 may be selected from a group of pumps of various types. The pump 173 may be, for example, an air pump capable of spraying a mixed mixture of a solid-type content and a liquid-type content in the form of a mist.

The discharge button 171 may be pressed by a user's grip pressure, the pump 173 may be operated by the discharge button 171, and in response to a suction operation of the pump 173, the mixture stored in the mixing chamber 161 may be sprayed to the outside of the housing 110 through the nozzle 172 via the hose 174.

The external discharge unit 170 may be configured to be coupled to the housing 110 and disposed to partially overlap with the mixing unit 160. That is, one end of the external discharge unit 170 may be inserted into the mixing unit 160 to allow the mixture stored in the mixing unit 160 to be sucked in.

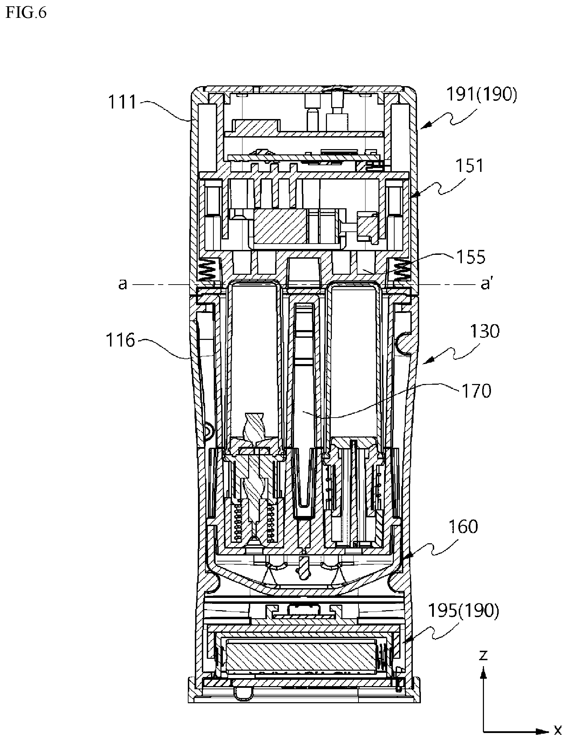

FIG. 6 is a cross-sectional view of a mixing spray device according to one embodiment of the present disclosure.

Referring to FIG. 6, a mixing spray device 100 may be configured such that a head cover 111 is partially separable from a middle cover 116 along a boundary a-a' defined between a pressure transmitting unit 155 included in an internal discharge unit 150 and a container portion 130. That is, the head cover 111 and the middle cover 116 may be coupled to each other via a hinge, and the head cover 111 may be configured to be opened and closed with respect to the middle cover 116.

APCB assembly 191 and the internal discharge unit 150, including a pressurizing unit 151 and a pressure transmitting unit 155, may be installed inside the head cover 111. In addition, a container portion 130, a mixing unit 160, an external discharge part 170, and a battery assembly 195 may be installed inside the middle cover 116.

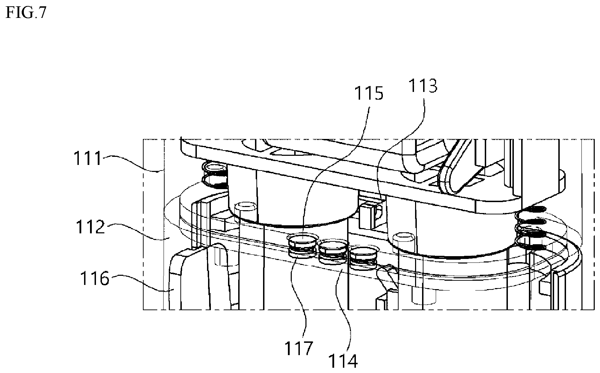

FIG. 7 is an exemplary diagram of a cartridge replacement structure of a mixing spray device according to one embodiment of the present disclosure.

Referring to FIG. 7, a coupling relationship between a head cover 111 and a middle cover 116 is illustrated. The head cover 111 and the middle cover 116 may be coupled to each other via a hinge 113 at a rear and a coupling part 114 at a front. In addition, as the coupling part 114 is separated from the middle cover 116, the head cover 111 may rotate about the hinge 113 to be opened with respect to the middle cover 116. Conversely, the head cover 111 is closed when the coupling part 114 is coupled to the middle cover 116.

The coupling part 114 is a portion of a front surface of the housing 110 where a head-cover bottom surface 112 and a top surface of the middle cover 116 come into contact with each other, and may be configured to include a pair of magnetic materials 115 and 117 for coupling. Through coupling/separation using a magnetic force between a first magnetic material 115 at an upper portion and a second magnetic material 117 at a lower portion, the coupling between the head cover 111 and the middle cover 116 may be reinforced and a coupling operation may be induced. At least one of the first magnetic material 115 at the upper portion and the second magnetic material 117 at the lower portion may be a magnet.

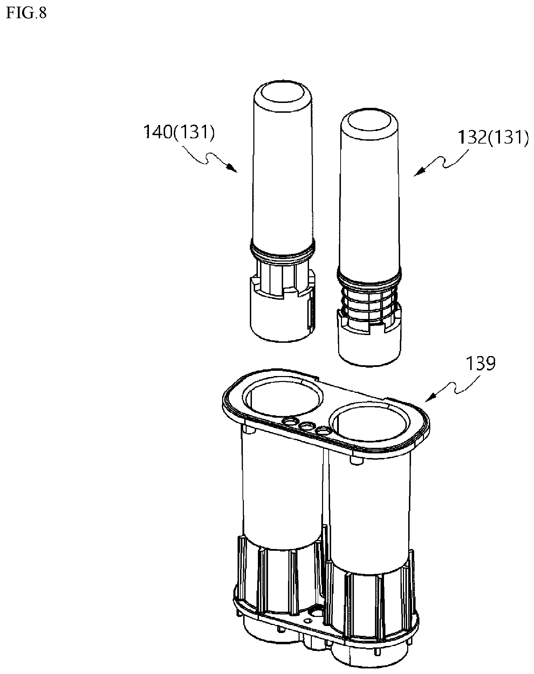

FIG. 8 is an exploded view of a container portion of a mixing spray device according to one embodiment of the present disclosure.

Referring to FIG. 8, a container portion 130 may be configured to include a cartridge cover 139 coupled to a housing 110, and a cartridge 131 capable of being coupled to and separated from the cartridge cover 139. That is, the cartridge 131 is a consumable and may be separated from the cartridge cover 139 and replaced after a head cover 111 is opened with respect to a middle cover 116, as shown in FIG. 7.

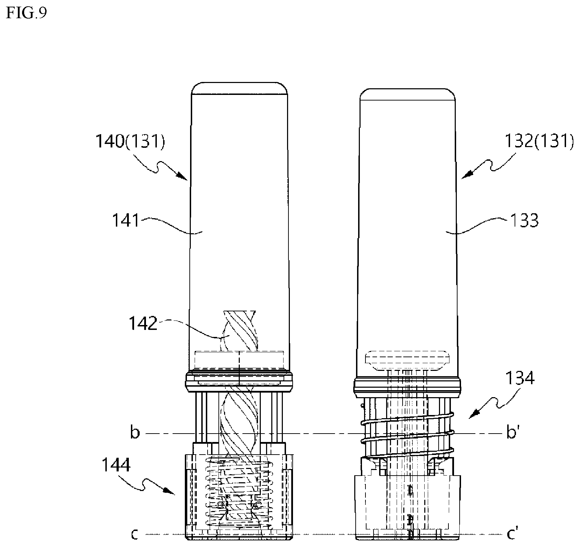

FIG. 9 is an exemplary diagram of a cartridge of a mixing spray device according to one embodiment of the present disclosure.

Referring to FIG. 9, a cartridge 131 may be configured to include a first cartridge 132 and a second cartridge 140. The first cartridge 132 and the second cartridge 140 may store different types of contents. For example, the first cartridge 132 may be configured to store a first content 11 in liquid form, and the second cartridge 140 may be configured to store a second content 12 in solid form.

The first cartridge 132 may be configured to include a first container 133 and a first discharge unit 134 coupled to the first container 133. The first container 133 stores the first content 11 and has a function of moving downward in response to pressure received from the internal discharge unit 150. As the first container 133 moves downward in response to pressure received from the internal discharge unit 150, the first discharge unit 134 has a function of receiving pressure from the first container 133 to discharge the first content 11 from the first container 133 to a mixing unit 160.

The second cartridge 140 may be configured to include a second container 141, a screw feeder 142, and a second discharge unit 144 that is coupled to the screw feeder 142 and receives pressure from the second container 141 so as to rotate the screw feeder 142 and discharge the second content from the second container 141. The second container 141 stores the second content 12 and has a function of moving downward in response to pressure received from the internal discharge unit 150. As the second container 141moves downward in response to the pressure from the second discharge unit 144, the second discharge unit 144 has a function of receiving pressure from the second container 141 and discharging the second content 12 from the second container 141 to the mixing unit 160.

The first container 133 and the second container 141 may have various shapes such as a cylinder, a triangular cylinder, a square cylinder, and a polygonal cylinder.

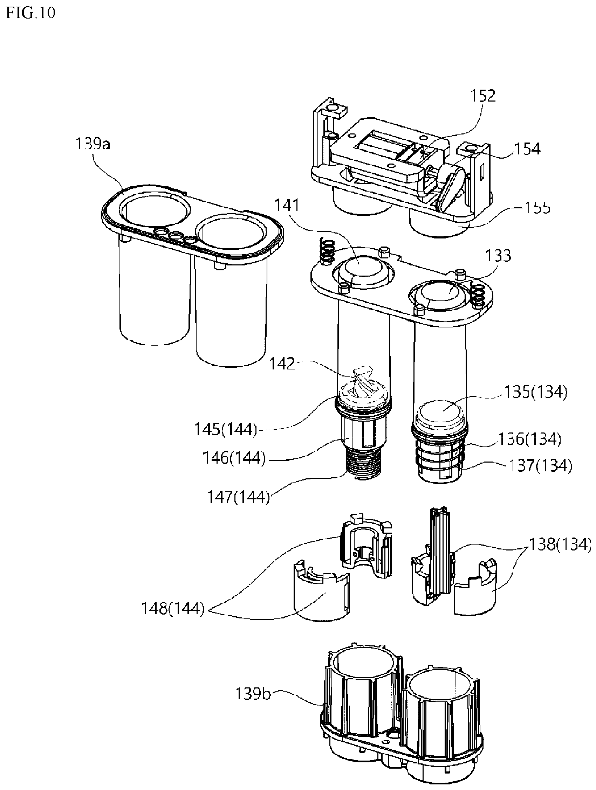

FIG. 10 is an exploded view of a main body of a mixing spray device according to the present embodiment.

Referring to FIG. 10, a motor assembly 152, a cam 154, and a pressure transmitting unit 155 included in an internal discharge unit 150 are illustrated. In addition, a component of a container portion 130, which receives pressure generated by the cam 154 through the pressure transmitting unit 155, is illustrated.

The pressure transmitting unit 155 may be disposed on a first container 133 and a second container 141 to pressurize the first container 133 and the second container 141.

The first discharge unit 134 may be configured to include a first upper module 135 configured to control the opening and closing of the first container 133, a first middle module 136 coupled to the first upper module 135, a first lower module 138 slidably coupled to the first middle module 136 in response to a downward movement of the first container 133 and configured to pressurize the first upper module 135 to allow the first content 11 to be discharged from the first container 133, and a first elastic body 137 configured to restore a position of the first container 133.

When the pressure of the internal discharge unit 150 is transmitted to the container portion 130 and the first lower module 138 pressurizes the first upper module 135 while moving upward relative to the first middle module 136, a liquid-type content stored in the first container 133 may be discharged into a mixing chamber 161 of a mixing unit 160.

The second discharge unit 144 may be configured to include a second upper module 145 configured to discharge a second content 12 in response to rotation of a screw feeder 142, a second middle module 146 coupled to the second upper module 145, a second lower module 148 slidably coupled to the second middle module 146 in response to a downward movement of the second container 141 and configured to receive pressure from the second container 141 to rotate the screw feeder 142, and a second elastic body 147 configured to restore a position of the second container 141.

The screw feeder 142 may be installed through the second upper module 145 and the second lower module 148. The pressure of the internal discharge unit 150 is transmitted to the container portion 130, and as the second middle module 146 moves downward relative to the second lower module 148, the screw feeder 142 may rotate, and the second content 12 stored in the second container 141 may fall and then be discharged into the mixing chamber 161 of the mixing unit 160.

Depending on a forward or reverse rotation of the screw feeder 142, a gap may be formed and filled between the second lower module 148 and a hemispherical plug 149 formed at an end of the screw feeder 142, thereby interrupting the discharge of the second content 12. A rubber packing or the like may be provided in a center hole of the second lower module 148 that comes into contact with the plug 149.

The first elastic body 137 and the second elastic body 147 have a function of lifting the first container 133 and the second container 141, which have been lowered, to original positions thereof by being inserted between the respective middle modules and lower modules.

The first content 11 stored in the first container 133 may be a liquid-type content. In addition, the second content 12 stored in the second container 141 may be a solid-type content. The liquid-type and solid-type contents discharged from the respective containers are mixed together in the mixing unit 160. In this case, a discharge amount and a mixing ratio of the contents may be determined by the pressure applied by the internal discharge unit 150 to the first container 133 and the second container 141. Therefore, in order to determine the discharge amount and mixing ratio of various combinations, a calibration process is required while varying a torque of the motor assembly 152 included in the internal discharge unit 150, a shape and size of the cam 154, and a clearance with the pressure transmitting unit 155. Also, even after the shape, size, and clearance of the cam 154 are determined, the torque of the motor assembly 152 may be adjusted through software (or middleware). Therefore, by updating or modifying the firmware, a user may determine the discharge amount and mixing ratio of the first content 11 and the second content 12 based on personal preference.

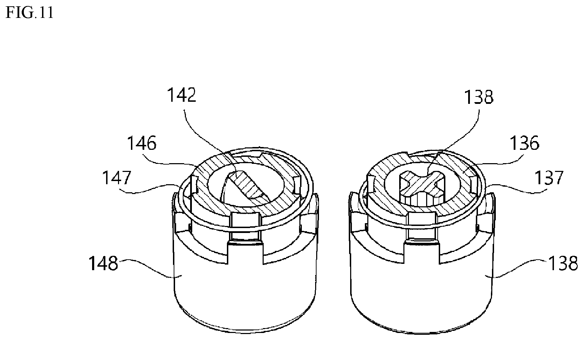

FIG. 11 is a cross-sectional view of FIG. 9.

Referring to FIGS. 9 and 11, a lower surface of a cross-section b-b' as shown in FIG. 9 is illustrated.

A first lower module 138 included in a first cartridge 132 and having a central cross-shaped cross-section pressurizes the first upper module 135, so that a liquid-type content may flow out from a first container 133 and be discharged into a mixing chamber 161 of a mixing unit 160.

A screw feeder 142 included in a second cartridge 140 may be rotated through the operation of a second lower module 148 and the second middle module 146, and as a result of this rotation, a solid-type content stored in the second container 141 may be discharged into the mixing chamber 161 of the mixing unit 160.

A first elastic body 137 has a function of returning the first container 1133 to an original position thereof, and a second elastic body 147 has a function of returning the second container 141 to an original position thereof.

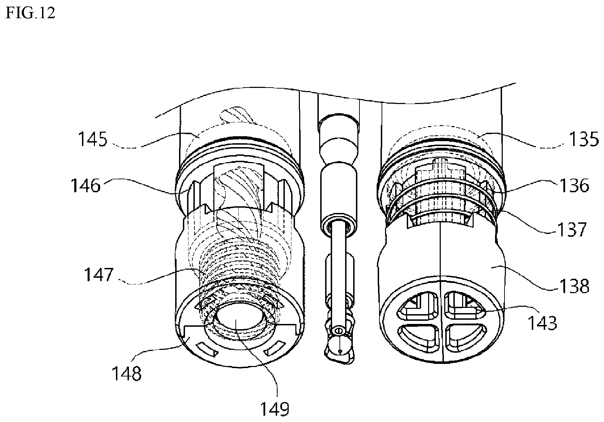

FIG. 12 is a partial perspective view depicting a bottom surface of a container.

Referring to FIG. 12, on the right side of the drawing, a bottom surface of a first lower module 138 of a first cartridge 132 is illustrated in a partial perspective view. On the left side of the drawing, a bottom surface of a second lower module 148 of a second cartridge 140 is illustrated in a partial perspective view.

A first discharge hole 143 may be formed at a lower portion of the first lower module 138 in the first cartridge 132 on the right side. When a first upper module 135 is opened by the first lower module 138, a first content 11 may be discharged through the first discharge hole 143 formed at the bottom surface of the first lower module 138.

In the second cartridge 140 on the left side, a second upper module 145, a second middle module 146 coupled to the second upper module 145, a second lower module 148 coupled to the second middle module 146, a screw feeder 142 coupled to the second middle module 146 and the second lower module, and a second elastic body 147 inserted between the second middle module 146 and the second lower module 148 are illustrated.

The second upper module 145 has a function of discharging a second content 12 in response to rotation of the screw feeder 142. The second middle module 146 has a function of rotating the screw feeder 142 by moving downward in response to pressure received from the second container 141.

The second lower module 148 is slidably coupled to the second middle module and has a function of interrupting the discharge of the second content 12 in response to rotation of the screw feeder 142. The discharge of the second content 12 may be interrupted as a hemispherical plug 149, formed at an end of the screw feeder 142, blocks a hole formed at the center of the second lower module 148. To prevent oxidation of the second content 12, a rubber packing may be formed in the hole of the second lower module 148.

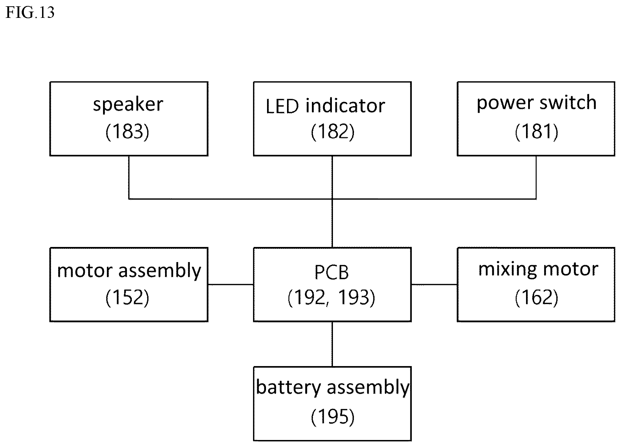

The second elastic body 147 has a function of restoring the position of the second container 141 by being inserted between the second middle module 146 and the second lower module 148. FIG. 13 is a circuit diagram of a mixing spray device according to one embodiment of the present disclosure.

Referring to FIGS. 3 and 13, a mixing spray device 100 according to one embodiment of the present disclosure is characterized by including a PCB assembly 191 and a battery assembly 195 as a power supply unit 190.

The PCB assembly 191 may be configured to include PCBs 192 and 193 including various driving and control circuits, and a PCB bracket 194 for fixing the PCBs.

The battery assembly 195 may be electrically connected to the PCBs 192 and 193 to supply circuit driving power to the PCBs 192 and 193. The battery assembly 195 may be configured to include a battery and a battery case. The battery may be a dry cell or a secondary battery. A USB port for charging secondary batteries may be included in a user interface. In addition, the mixing spray device 100 may be connected to a computer via a USB terminal, and adjustments to the discharge amount and mixing ratio of the first content 11 and the second content, as well as updates to firmware and the like, may be made.

The user interface 180 may be configured to include a power switch 181, an LED indicator 182, and a speaker 183. In addition, the mixing spray device 100 may be configured to include a motor assembly 152 of an internal discharge unit 150 and a mixing motor 162 of a mixing unit 160. In addition, the components of the user interface 180, the motor assembly 152 and the mixing motor 162 are electrically connected to various driving circuits and control circuits included in the PCBs 192 and 193, and may receive driving power and control signals from various driving circuits.

When the power switch 181 is pressed by a user, the mixing spray device 100 is operated. In a powered-on state, the mixing spray device 100 completes an operation of producing a mixed solution in the mixing chamber 161 through the operation of the internal discharge unit 150, the container portion 130, and the mixing unit 160. In this case, the mixing spray device 100 may use at least one of an LED indicator 182 and a speaker 183 of the user interface to notify a status of the mixing spray device 100, i.e., a status in which the mixture 20 is prepared.

In addition, at least one of the LED indicator 182 and the speaker 183 may be configured to indicate, through light or sound, that the mixture is in a discharge standby state when the mixture is not discharged from the mixing chamber 161 to the outside of a housing 110. That is, if the discharge is not performed within a predetermined period of time after entering the discharge standby state, the user interface 180 may notify the discharge standby state by changing a color of light or outputting a sound.

A method for detecting that the mixture 20 has not been discharged and is still in a discharge standby state may be implemented by using a sensor to determine whether a discharge button 171 is pressed or to determine whether the mixture 20 is present in the mixing chamber 161.

The external discharge part 170 is operated by a user's grip pressure, and a mixed liquid in the mixing chamber 161 is sprayed through a nozzle 172.

A mixing spray device 100 according to one embodiment of the present disclosure has a function of simultaneously discharging first and second contents 11 and 12, which are heterogeneous materials, into the mixing chamber 161 inside the housing 110, and spraying the mixture 20 generated through the operation of the mixing unit 160 to the outside through the operation of the external discharge unit 170. In particular, the external discharge operation may be performed in a non-powered manner without using electricity.

According to one embodiment of the present disclosure, heterogeneous materials may be mixed and discharged without altering each component.

Additionally, the solid-type and liquid-type contents that constitute the contents may be individually discharged in accordance with a single-use amount.

Additionally, the solid-type and liquid-type contents that constitute the contents may be uniformly mixed and discharged.

Additionally, a single-use amount of heterogeneous materials may be mixed together, and a mixed mixture may be completely discharged during a single use.

Additionally, non-discharge of the mixture produced during the mixing process may be informed to a user.

As described above, although several preferable embodiments of the present disclosure have been provided, the embodiments set forth in the "Specific Details for Carrying Out the Invention" section are merely exemplary. Those skilled in the art to which the present disclosure pertains will readily understand that various modifications or equivalent implementations of the present disclosure may be made based on the above description.

In addition, since the present disclosure may be implemented in various other forms, it should not be construed as limited to the above description. The above description is merely provided to complete the disclosure of the present disclosure and to fully inform those skilled in the art of the scope of the present disclosure. It should be understood that the present disclosure is defined only by the claims.

### [INDUSTRIAL APPLICABILITY]

The present disclosure may be used in a method for manufacturing a cosmetic container.

## Claims

1. A mixing spray device comprising:
a housing; and
a main body installed within the housing, wherein the main body comprises:
a container portion for storing heterogeneous contents separately;
an internal discharge unit configured to pressurize the container portion and discharge the contents into a mixing chamber installed below the container portion;
mixing unit configured to mix the contents within the mixing chamber to produce a mixture;
an external discharge unit configured to discharge the mixture from the mixing chamber;
a power supply unit configured to supply power to the internal discharge unit and the mixing unit; and
a user interface installed on a surface of the housing,
wherein the user interface is configured to discharge a predetermined amount of the contents and control discharge of all the mixture within a predetermined time after mixing.

2. The mixing spray device of claim 1, wherein the housing comprises:
a head cover on which the user interface is installed;
a middle cover coupled to the head cover; and
a bottom cover coupled to the middle cover.

3. The mixing spray device of claim 2, wherein the head cover comprises:
a hinge connected to the middle cover on one side; and
a coupling part coupled to the middle cover on the other side according to an action of the hinge and configured to rotate to be opened and closed with respect to the middle cover according to separation and coupling of the coupling part and the middle cover.

4. The mixing spray device of claim 3, wherein the middle cover and the coupling part comprise a magnetic material that induces the coupling.

5. The mixing spray device of claim 1, wherein the container portion comprises:
a cartridge storing the contents and being replaceable; and
a cartridge housing in which the cartridge is mounted.

6. The mixing spray device of claim 5, wherein the cartridge comprises:
a first cartridge in which a first content is stored; and
a second cartridge in which a second content is stored.

7. The mixing spray device of claim 6, wherein the first cartridge comprises:
a first container storing the first content and moving downward in response to pressure received from the internal discharge unit; and
a first discharge unit coupled to the first container and discharging the first content from the first container in response to the pressure received.

8. The mixing spray device of claim 7, wherein the first discharge unit comprises:
a first upper module for controlling opening and closing of the first container;
a first middle module coupled to the first upper module;
a first lower module slidably coupled to the first middle module according to a downward movement of the first container and pressurizing the first upper module to allow the first content to be discharged from the first container; and
a first elastic body restoring a position of the first container.

9. The mixing spray device of claim 6, wherein the second cartridge comprise:
a second container storing the second content and moving downward in response to pressure received from the internal discharge unit;
a screw feeder installed in the second container; and
a second discharge unit coupled to the screw feeder and interrupting discharge of the second contents from the second container by rotating the screw feeder in response to the pressure.

10. The mixing spray device of claim 9, wherein the second discharge unit comprises:
a second upper module for discharging the second content in response to rotation of the screw feeder;
a second middle module coupled to the second upper module and rotating the screw feeder by moving downward under the pressure;
a second lower module slidingly coupled to the second middle module and interrupting discharge of the second content in response to rotation of the screw feeder; and
a second elastic body restoring a position of the second container.

11. The mixing spray device of claim 1,
wherein the internal discharge unit comprises:
a pressurizing unit applying pressure to the container using the power; and
a pressure transmission unit transmitting the pressure of the pressurizing unit to the container portion, and
wherein the user interface comprise a power button for controlling the power supply to drive the pressurizing unit.

12. The mixing spray device of claim 11,
wherein the pressurizing unit comprises:
a motor assembly driven by the power button; and
a cam coupled to a shaft of the motor assembly,
wherein the pressure transmitting unit moves by the cam to transmit pressure to the container and is restored to an original position thereof by a restorative elastic body.

13. The mixing spray device of claim 1, wherein the mixing unit comprises:
a mixing motor driven by the power; and
a screw coupled to the mixing motor to mix the contents in conjunction with the mixing motor.

14. The mixing spray device of claim 1, wherein the external discharge unit comprises:
a discharge pump for applying discharge pressure to the mixture;
a discharge hose connecting an input side of the discharge pump and the mixing chamber; and
a nozzle connected to an output side of the discharge pump.

15. The mixing spray device of claim 14, wherein the user interface comprises a discharge button for driving the discharge pump.

16. The mixing spray device of claim 15, wherein the user interface comprises an LED indicator indicating a status of the mixing spray device.

17. The mixing spray device of claim 16, wherein the user interface further comprises a speaker and notifies a discharge standby state to a user through at least one of light and sound when the mixture is not discharged within a predetermined time.

18. The mixing spray device of claim 1, wherein the container portion comprises:
a first container for storing a liquid-type content among the contents; and
a second container for storing a solid-type content,
wherein the second container comprises a screw feeder that is rotated by pressure from the internal discharge unit to discharge the solid-type content from the second container to the mixing chamber.

19. A mixing spay method performed by a mixing spray device and comprising:
storing heterogeneous contents in a container portion separately;
pressurizing the container portion to discharge the contents into a mixing chamber;
mixing the contents in the mixing chamber to produce a mixture; and
discharging the mixture from the mixing chamber,
wherein the mixing spray method further comprises notifying a discharge standby state to a user through a user interface when the mixture is not discharged within a predetermined time.
